# EUROPÄISCHE PATENTSCHRIFT

(11) **EP 0 362 328 B1**
(45) Veröffentlichungstag und Bekanntmachung des Hinweises auf die Patenterteilung: **09.08.1995**
(21) Anmeldenummer: 89903079.5
(22) Anmeldetag: 13.03.1989
(51) Int. Cl.: F16N 11/10

(54) **SCHMIERSTOFFGEBER**
LUBRICANT DISPENSER
DISTRIBUTEUR DE LUBRIFIANTS

(30) Priorität: 16.03.1988 CH 982/88
(43) Veröffentlichungstag der Anmeldung: 11.04.1990
(73) Patentinhaber: WYSSMANN, Max, CH-3360 Herzogenbuchsee (CH)
(72) Erfinder: WYSSMANN, Max, CH-3360 Herzogenbuchsee (CH)
(74) Vertreter: Specht, Peter
(86) Internationale Anmeldenummer: CH8900044
(87) Internationale Veröffentlichungsnummer: WO8908800

(56) Entgegenhaltungen:
- EP-A- 0 209 926
- CH-A- 533 796
- DE-A- 2 520 241
- FR-A- 2 432 222
- US-A- 2 733 836
- US-A- 3 308 046
- US-A- 3 430 731
- US-A- 3 745 049
- US-A- 4 671 386

## Beschreibung

Die Erfindung bezieht sich auf ein Gerät zur selbstätigen, steuerbaren Abgabe eines Schmierstoffs an ein Schmiersystem gemäss dem Oberbegriff des Patentanspruchs 1.

Ein Gerät der genannten Art ist aus der deutschen Patentschrift 25 20 241 (& USA-Patentschrift 4,023,648) bekannt.

Beim bekannten Gerät weist ein im wesentlichen zylindrischer Behälter einen trichterförmigen Boden auf, welcher mit einem aufschraubbaren, nippelförmigen Schlierauslass versehen ist, der anstelle einer Standardschmierkappe auf ein Schmiersystem, z.B. auf die Schmierstelle eines Lagers, aufschraubbar ist. An dem Ende des Behälters, welches dem Boden gegenüberliegt, ist ein Einsatz befestigt. Eine bewegliche Trenneinrichtung trennt den Behälter zwischen dem Boden und dem Einsatz gas- und schmierstoffdicht in eine untere Schlierstoffkammer und in eine obere Druckgaskammer, wobei die Trenneinrichtung ein gasdichtes, ausdehnbares Diaphragma und einen längs der Innenwand des Behälters beweglichen Kolben umfasst, der mittels Dichtungsringen das Eindringen von Schmierstoff aus der Schmierstoffkammer in den oberen Teil des Behälters verhindert. Der genannte Einsatz enthält eine galvanische, gaserzeugende Zelle, welche über Oeffnungen in Richtung zum Diaphragma das bei einem Stromfluss durch die Zelle erzeugte Gas abgibt. Die Zelle weist in Sandwich-Bauweise Elektroden und einen Elektrolyten auf. Die Elektroden sind an einen ebenfalls im Einsatz befindlichen elektrischen Schaltkreis angeschlossen, der mehrere von aussen betätigbare Schalter und mehrere feste Widerstände umfasst, um durch wahlweise Belastung der Zelle ein höhere oder tiefere Gasentwicklung zu bewirken.

Nachteilig an diesem Gerät ist der Umstand, dass es als untrennbarer Behälter ausgebildet ist. Wenn also im Betrieb der Schmierstoffvorrat erschöpft ist und/oder die galvanische Zelle verbraucht ist, muss das ganze Gerät weggeworfen und durch ein neues Gerät ersetzt werden.

An sich wäre es möglich, das bekannte Gerät entsprechend der Ausführungsform eines ähnlichen Geräts gemäss der europäischen Patentanmeldung 0 209 926 auszubilden. Dieses bekannte Gerät enthält jedoch keine Mittel zur Steuerung der Gasentwicklung, sondern nur Mittel zur Aktivierung einer oder mehrerer galvanischer Zellen. Bei diesem Gerät sind die galvanischen Zellen und ihre Aktivierungsmittel in einem oberen, abschraubbaren Deckel untergebracht. Bei Erschöpfung des Schmierstoffvorrats und/oder der galvanischen Zellen kann dieser obere Deckel abgeschraubt werden, worauf nach Entfernung des Diaphragma und des Kolbens die Schmierstoffkammer mit neuem Schmierstoff aufgefüllt werden kann. Gleichzeitig sollen die im Deckel gelagerten galvanischen Zellen ersetzt werden. Hierauf sind der Kolben und das Diaphragma wieder einzusetzen und der Deckel auf den Behälter aufzuschrauben.

Dieses Gerät weist dennoch die Nachteile auf, dass der Wiederbenützungsvorgang , zum Beispiel das Einfüllen von Schmierstoff in den Behälter, das Auswechseln der galvanischen Zellen und das Entfernen bzw. Wiedereinsetzen des Diaphragma und des Kolbens, mühsam ist, und dass zudem die Gefahr besteht, dass durch wiederholtes Entfernen und Wiedereinsetzen des Diaphragma und des Kolbens die erforderlichen Gas- und Schmierstoffabdichtungen beschädigt werden.

Aufgabe der vorliegenden Erfindung ist, ein Gerät der eingangs genannten Art zu schaffen, bei welchem ein Ersatz der reinen Verbrauchsmaterialen, d.h. des Schmierstoffs und der galvanischen Zelle oder Zellen, in einfacher und die Funktion der übrigen Teile des Geräts in keiner Weise nachteilig beeinflussenden Art ermöglicht ist.

Die Erfindung stützt sich auf die Erkenntnis, dass es bei verschiedenen elektronischen Geräten an sich bekannt ist, die reinen, zum Betrieb erforderlichen Verbrauchsmaterialien durch einfache Handgriffe zu ersetzen, wie beispielsweise bei Photoapparaten das Einsetzen eines neuen, unbelichteten Films und neuer galvanischer Knopfzellen als elektrische Speisequellen für den Betrieb des Photoapparats.

Gemäss der Erfindung weist das eingangs erwähnte Gerät die im kennzeichnenden Teil des Patentanspruchs 1 angeführten Merkmale auf.

Das erfindungsgemässe Gerät erlaubt es, Schmierstoff ohne jede Beeinträchtigung des Kolbens und der diesbezüglich unabdingbaren gas- und schmierstoffbezogenen Dichtungsmittel nachzufüllen. Insbesondere erlaubt es das Gerät, Ersatzschmierstoff in einfacher und sauberer Weise in die Schmierstoffkammer einzubringen, wozu der Schmierstoff in einer biegsamen Hülle verpackt sein kann, so dass jede Verschleppungsgefahr von Schmierstoff im Behälter ausgeschlossen ist.

Des weitern können beim erfindungsgemässen Gerät die druckerzeugenden galvanischen Zellen ebenso einfach und sicher ausgewechselt werden, wie dies bei anderen elektrischen und elektronischen Geräten üblich ist.

Dazu kommt, dass beim erfindungsgemässen Gerät das Auswechseln der Verbrauchsmittel (Schmierstoff, galvanische Zellen) die übrigen wesentlichen, kostenintensiven Teile des Geräts in keiner Weise nachteilig beeinflusst, so dass der Benützer des Geräts tatsächlich über viele Jahre hinweg nur die Kosten des verbrauchten Schmierstoffs und der erschöpften galvanischen Zellen in Rechnung setzen muss.

Ein weiterer Vorteil des erfindungsgemässen Geräts liegt darin, dass das Ausmass der Druckgasentwicklung und damit das Mass des pro Zeiteinheit abgegebenen Schmierstoffs durch eine einfache Drehbewegung eines Einstellelements kontinuierlich veränderlich und zudem jederzeit neu einstellbar ist.

Ausführungsbeispiele des Erfindungsgegenstandes werden nachstehend anhand der Zeichnungen erläutert. Es zeigen:
Fig. 1 eine Ansicht eines erfindungsgemässen Geräts;
Fig. 2 eine Draufsicht auf die Oberseite des Geräts der Fig. 1;
Fig. 3 einen Längsschnitt des Geräts der Fig. 1 mit eingebrachtem, verpacktem Schmierstoff und mit einer eingesetzten galvanischen Doppelzelle;
Fig. 4 eine Ansicht von in einer Hülle verpacktem Schmierstoff für den Gebrauch im Gerät der Fig. 1 und 3; und
Fig. 5 eine Ansicht, teilweise im Schnitt, der in das Gerät der Fig. 3 eingesetzten galvanischen Doppelzelle.

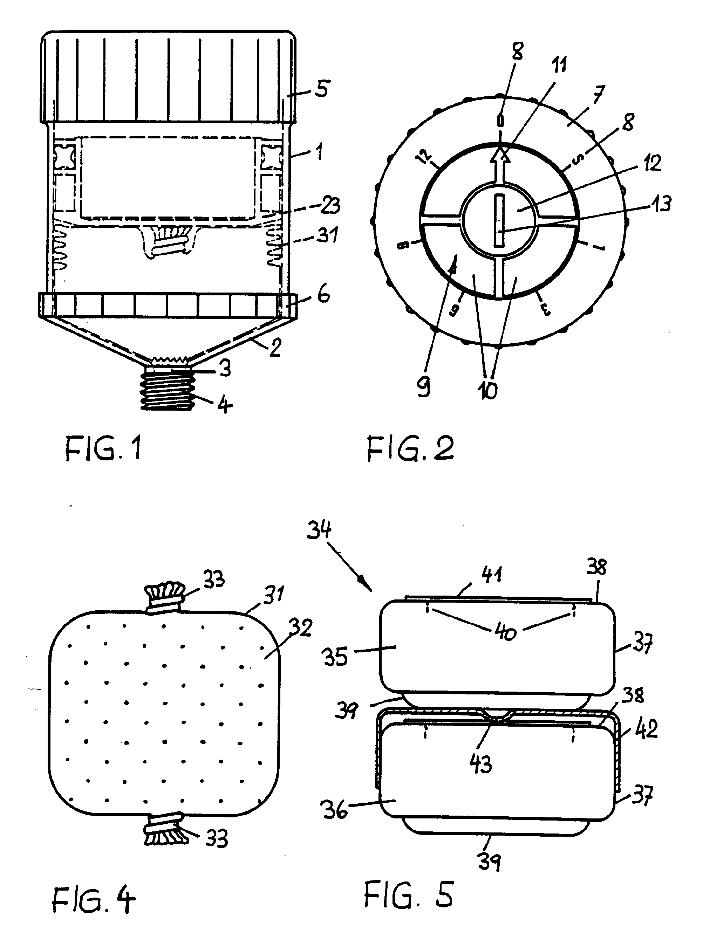

Gemäss Fig. 1 weist das vorliegende Gerät einen im wesentlichen zylindrischen Belsälter 1 auf, der an seinem einen Ende durch einen auf den Behälter 1 lösbar aufgeschraubten, trichterförmigen Deckel 2 abgeschlossen ist. Der Deckel 2 ist mit einem einen Durchlass 3 für Schmierfett aufweisenden Gewindenippel 4 versehen, um das Gerät anstelle einer Standardschmierkappe auf ein Schmiersystem, z.B. auf die Schmierstelle eines Lagers einer Maschine schrauben zu können. Zur Erleichterung des Aufschraubens ist der Behälter 1 mit einem oberen Griffrand 5 versehen. Ebenso weist der Deckel 2 einen das Aufschrauben des Deckels auf den Behälter 1 erleichternden Griffrand 6 auf.

Wie aus Fig. 2 ersichtlich ist, weist das andere, in Fig. 1 obere Ende des Behälters 1 einen ringscheibenförmigen Randbereich 7 auf, der mit verschiedenen Markierungen 8 versehen ist. In der durch den Randbereich 7 radial begrenzten kreisförmigen Oeffnung ist in der Oberseite des Behälters 1 ein ringscheibenförmiges Drehelement 9 eingesetzt, das mit vier Griffmulden 10 und einer pfeilförmigen Einstellmarkierung 11 versehen ist. Schliesslich ist im zentralen Bereich der Oberseite des Behälters 1 ein Schraubdeckel 12 ersichtlich, welcher mit einer Nut 13 zu seiner Betätigung mittels einer Münze oder dgl. versehen ist.

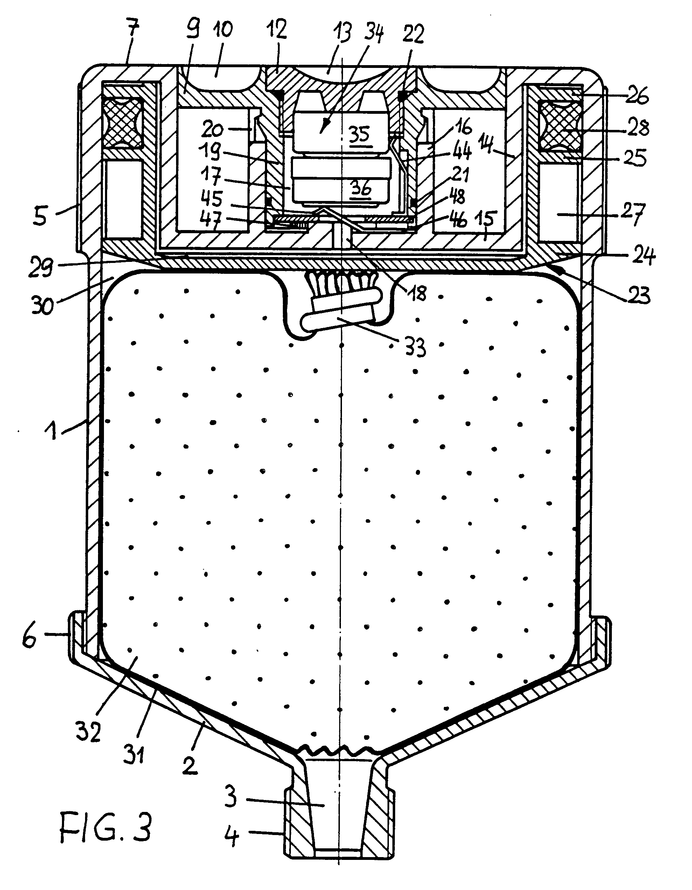

Der Aufbau und die Funktion des vorliegenden Geräts gehen im einzelnen aus der Schnittdarstellung der Fig. 3 hervor. In Uebereinstimmung mit Fig. 1 ist in Fig. 3 der Behälter 1 mit dem unteren trichterförmigen Deckel 2 versehen, der auf den Behälter 1 aufgeschraubt ist und den Gewindenippel 4 mit dem Durchlass 3 sowie den Griffrand 6 aufweist, während der Behälter 1 an seinem oberen Ende mit dem Griffrand 5 versehen ist.

Ferner ist aus Fig. 3 ersichtlich, dass der Behälter 1 an seiner Oberseite den ringscheibenförmigen Randbereich 7 aufweist. Von diesem Randbereich 7 aus ist der Behälter 1 über ein zylindrisches Wandteil 14 und ein verbindendes, abschliessendes Bodenteil 15 nach innen gezogen. An das Bodenteil 15 ist zudem ein hülsenförmiges, sich nach oben erstreckendes Behälterteil 16 angeformt, das einen topfförmigen Behälterraum 17 bildet. Das Bodenteil 15 weist eine mittige Bohrung oder Oeffnung 18 auf, deren Funktion nachfolgend noch erläutert wird.

Im Behälterteil 16 ist ein hülsenförmiger Ansatz 19 des Drehteils 9 der Fig. 1 drehbar gelagert und in axialer Richtung durch elastische Finger 20 des Behälterteils 16 festgehalten, die auch als elastischer Rand des Behälterteils 16 mit der aus Fig. 3 ersichtlichen Form ausgebildet sein können. Ferner ist zwischen dem Behälterteil 16 und dem hülsenförmigen Ansatz 19 des Drehteils 9 ein Dichtungsring 21 angeordnet, um in der aus der nachfolgenden Erläuterung noch ersichtlichen Weise das im Innern des hülsenförmigen Ansatzes 19 entwickelte Gas abzudichten. In Fig. 3 sind auch die Griffmulden 10 des Drehteils 9 dargestellt. Ferner ist in das Oberteil des Drehteils 9 bzw. in dessen hülsenförmigen Ansatz 19 der Schraubdeckel 12 mit der Betätigungsnut 13 eingeschraubt und mittels eines Dichtringes 22 gegenüber dem Drehteil 9 abgedichtet.

Unterhalb des inneren Bodenteils 15 des Behälters 1 ist im Behälter 1 ein axial beweglicher, topfförmiger Kolben 23 angeordnet. Der Kolben 23 ist mit ringförmigen Vorsprüngen 24, 25, 26 versehen, die den Kolben 23 an der Innenwand des Behälters 1 derart abstützen, dass dieser sich im Behälter 1 nicht verklemmen kann. Zwischen den ringförmigen Vorsprüngen 24 und 25 sind Verstärkungswände 27 ausgebildet. In der durch die ringförmigen Vorsprünge 25 und 26 begrenzten Kammer ist ein Dichtungsring 28 eingelegt.

Der Kolben 23 trennt das Innere des Behälters 1 einschliesslich des aufgeschraubten Deckels 2 in eine Druckgaskammer 29 und in eine Schmierstoffkammer 30. Die Druckgaskammer 29 hat in dem in Fig. 3 dargestellten Ausgangszustand des vorliegenden Geräts nur die Höhe eines Spaltes. In der Schmierstoffkammer 30 ist ein in einer biegsamen Hülle 31 verpackter Schmierstoff 32 untergebracht, wobei die Hülle 31 an ihrem dem Durchlass 3 benachbarten Ende offen bzw. aufgetrennt ist.

In Fig. 4 ist eine derartige Verpackung mit der biegsamen Hülle 31 für den Schmierstoff 32 vor deren Einsetzen in den Behälter 1 dargestellt. Es ist ersichtlich, das die Hülle 31 mit beidseitigen Abklemmringen oder -bändern 33 wurstartig ausgebildet ist und demnach in einfacher und rationeller Weise mittels bekannter Wurstmaschinen hergestellt werden kann.

Zu der an sich bekannten Erzeugung eines im Druckgasraum 29 auf den Kolben 23 wirksamen Gasdrucks zwecks kontinuierlichen Ausstossens des Schmierstoffs 32 über den Durchlass 3 zum erwähnten Schmiersystem ist im topfförmigen Behälterraum 17 eine galvanische Doppelzelle 34 angeordnet. Die Doppelzelle 34 besteht aus zwei mechanisch fest miteinander verbundenen und elektrisch in Reihe geschalteten , kapselförmigen galvanischen Zellen 35 und 36, wie sie in Fig. 6 in grösserem Massstab dargestellt sind.

Gekapselte galvanische Einzelzellen 35, 36 zur Entwicklung von Wasserstoffgas, oder allenfalls auch Sauerstoffgas, die in einem Metallgehäuse eine Anode, eine Kathode und einen wässrigen Elektrolyten enthalten, sind an sich aus der deutschen Offenlegungsschrift 35 32 335 bekannt. Es handelt sich hierbei im wesentlichen und im besonderen um ihrem eigentlichen Zweck entfremdete Zink/Luft-Zellen, wie sie beispielsweise für Hörgeräte angewendet werden und handelsüblich sind., Jedoch weist die vorliegende, bekannte galvanische Zelle ein anderes Elektrodenmaterial und einen anderen Aufbau als die erwähnten Zellen für Hörgeräte auf. Vor allem aber ist eine solche Zelle gemäss der deutschen Offenlegungsschrift 35 32 335 zur Entwicklung von Wasserstoffgas ausgebildet, welches dadurch erzeugt wird, dass die Elektroden der Zelle mit einem äusseren Schliessungswiderstand verbunden werden, wobei die eine Elektrode wasserstoffdurchlässig bzw. die Kapselung der Zelle mit mindestens einer kleinen Oeffnung zur Abgabe des entwickelten Wasserstoffgases versehen ist.

Aus Fig. 5 ist ersichtlich, dass jede gekapselte galvanische Zelle 35, 36 dieser bekannten Art, die auch als Knopfzelle bezeichnet wird, einen metallischen Mantel 37 mit einer Stirnfläche 38, welche beide mit der einen Elektrode der Zelle in elektrischer Verbindung stehen, und eine zweite, davon isolierte metallische Stirnfläche 39 hat, die mit der anderen Elektrode der Zelle in elektrischer Verbindung steht. Mit 40 sind zwei kleine Löcher auf der Stirnfläche 38 jeder Zelle 35, 36 angedeutet, durch welche entwickeltes Wasserstoffgas nach aussen austreten kann. Um das Eindringen von Umgebungsluft in diee Zellen in deren Ruhe- oder Lagerzustand zu verhindern, sind die Löcher 40 durch einen Kleber 41 abgedeckt. Im Betrieb hebt das in jeder Zelle entwickelte Wasserstoffgas den Kleber 41 von den Löchern 40 ab, so dass das Wasserstoffgas frei austreten kann.

In der Doppelzelle der Fig. 3 und sind die beiden Zellen 35 und 36 der genannten Art mechanisch fest miteinander verbunden und elektrisch in Reihe geschaltet. Hierzu ist ein dosenähnliches metallisches Verbindungselement 42 vorgesehen, das einerseits mit der Stirnfläche 39 der einen Zelle 35 und andererseits mit dem Mantel 37 der anderen Zelle 36, beispielsweise über Punktschweissstellen, mechanisch und elektrisch verbunden ist. Eine Sicke 43 schafft einen Gasraum, aus welchem das von der Zelle 36 entwickelte und über ihre Löcher entweichende Wasserstoffgas nach aussen gelangen kann. Hierzu ist das Verbindungselement 42 mit seitlichen, in Fig. 5 nicht dargestellten Oeffnungen versehen.

Die Verwendung einer Mehrfachzelle, insbesondere einer Doppelzelle gemäss Fig. 3 und 5, erhöht die Zellenspannung und damit die Steuergenauigkeit und die Gaserzeugungskapazität des vorliegenden Geräts.

Aus Fig. 3 ist ersichtlich, dass die galvanische Doppelzelle 34 im Behälterraum 17 mit zwei Kontaktelementen 44 und 45 in Berührung steht. Das eine, federnde Kontaktelement 44 liegt am Vantel 37 der oberen Zelle 35, und das andere, federnde Kontaktelement 45 an der Stirnfläche 39 der unteren Zelle 36 an. In den Boden des topfförmigen Behälterraums 17 ist eine metallische Scheibe 46 fest eingelegt, aus welcher einerseits das Kontaktelement 45 und andererseits ein federnder Schleifer 47 geformt sind. Vorzugsweise sind die Kontaktflächen der Kontaktelemente 44, 45 und des Schleifers 47 mit einer Edelmetallschicht versehen.

Etwas oberhalb der Scheibe 46 ist ein ringförmiges Widerstandselement 48 angeordnet, das mit dem hülsenförmigen Ansatz 19 des Drehteils 9 mechanisch fest verbunden ist. Das Widerstandselement 48 weist eine kreisförmige, aber nicht vollständig geschlossene Widerstandsbahn auf, an welcher der Schleifer 47 anliegt und mit deren einem Ende das Kontaktelement 44 mechanisch und elektrisch verbunden ist. Somit ist die freie Elektrode der galvanischen Zelle 35 mit der freien Elektrode der galvanischen Zelle 36 je nach Einstellung des Drehelements 9 über einen grösseren oder kleineren Schliessungswiderstand verbunden, wobei in einer Nullstellung des Drehelements 9 die genannten Elektroden elektrisch voneinander getrennt sind.

Zum Betrieb des beschriebenen Geräts wird in einfacher Weise wie folgt vorgegangen.

Nach einem Lösen des Deckels 12 des Behälterraums 17 (mit einer Münze oder dgl.) wird der trichterförmige Deckel 2 (Fig. 1, 3) vom Behälter 1 abgeschraubt, worauf ein in der Hülle 31 verpackter Schmierstoffvorrat in den Behälter 1 von unten her eingeschoben wird, wobei der Kolben 23 automatisch nach oben gedrückt wird. Vor dem Wiederaufschrauben des Deckels 2 wird das dem Deckel 2 benachbarte Ende der verschlossenen Hülle 31 aufgetrennt (beispielsweise durch Abschneiden des Abklemmringes 33) oder perforiert.

Hierauf wird eine vorgefertigte Doppelzelle 34 in den Behälterraum 17 unter Beachtung der erforderlichen Polarität gemäss Fig. 3 eingelegt, und der Behälterraum 17 wird durch Wiederaufschrauben des Deckels 12 gasdicht verschlossen. Das Drehteil 9 befindet sich hierbei in der in Fig. 2 dargestellten Stellung "0", in welcher die Endelektroden der Doppelzelle 34 voneinander elektrisch getrennt sind.

In der Folge wird nun das Drehteil 9 in die Stellung gebracht, in welcher der Pfeil 11 auf die Markierung "S" mit der Bedeutung "Start" der Fig. 2 zeigt. In dieser Stellung des Drehelements 9 sind die Endelektroden der galvanischen Doppelzelle 34 praktisch kurzgeschlossen, so dass ein maximaler Strom eine starke Gasentwicklung und einen entsprechend hohen Gasdruck über die Bohrung 18 auf den Kolben 23 bewirkt. Sobald Schmierfett aus dem Durchlass 3 des Gewindenippels 4 austritt, ist das Gerät einsatzbereit. Das Drehteil 9 wird nun vorübergehend in die Stellung "0" zurückgedreht,

Das betriebsbereite Gerät kann nun mit seinem Gewindenippel 4 auf das vorgesehene Schmiersystem aufgeschraubt werden. Zur Inbetriebnahme der durch das Gerät bewirkten kontinuierlichen und steuerbaren Schmierstoffabgabe wird das Drehteil 9 in eine der in Fig. 2 dargestellten Positionen "1" bis "12" gebracht, welche anzeigen, innerhalb welcher Anzahl von Monaten der im Behälter 1 ursprünglich vorhandene Schmierstoff voraussichtlich abgegeben sein wird. Diese Funktionsweise des Geräts beruht in an sich bekannter Weise darauf, dass ein höherer Schliessungswiderstand der galvanischen Doppelzelle 34 deren Gasentwicklung herabsetzt, so das auch die Abgabe von Schmierstoff pro Zeiteinheit entsprechend herabgesetzt ist, und umgekehrt.

Es ist zweckmässig, den Behälter 1 aus einem transparenten Kunststoffmaterial zu fertigen, weil damit in bekannter Weise die jeweilige Lage des Kolbens 23 und dadurch des verbleibenden Schmierstoffvorrats sofort ersichtlich ist. In Fig 1 ist mit gestrichelten Linien eine nach einer bestimmten Betriebszeit erreichte Zwischenstellung des Kolbens 23 angedeutet. Die fortschreitend von ihrem oberen Ende her entleerte Hülle 31 der Schmierstoffverpackung faltet sich hierbei zwangslos, ohne dass Schmierstoff mit der Innenwand des Behälters 1 in Berührung käme.

Da ein transparenter Kunststoff derzeit ein gewisse Gasdurchlässigkeit aufweist, die sich angesichts der langen Betriebszeit des vorliegenden Geräts bis zu einem Jahr nachteilig auswirken kann, ist es von Vorteil, mindestens den vom Kolben 23 überstrichenen Bereich des Behälters 1 auf dessen Aussen- oder Innenseite eine gasdichte Metallschicht aufzubringen. Hierbei wird ein schmaler Längsbereich der Behälterwand unbedeckt belassen, damit die Lage des Kolbens 23 und somit der verbleibende Schmierstoffvorrat visuell überprüfbar bleibt.

An sich ist das vorliegende Gerät bei Verwendung eines entsprechenden Schmierstoffes für den Einsatz in einem weiten Temperaturbereich von beispielsweise -20 Grad C bis + 60 Grad C geeignet Da jedoch auch in einem engeren Temperaturbereich sich die Viskosität des Schmierstoffs mit steigender Temperatur verringert, besteht die Gefahr, dass bei steigender Temperatur des Behälters 1 pro Zeiteinheit mehr Schmierstoff als erwünscht und erforderlich abgegeben wird. Um diese nachteilige Erscheinung zu vermeiden, kann das vorliegende Gerät insbesondere wie folgt ausgebildet werden:
- erstens kann das Widerstandselement derart ausgebildet werden, dass es einen starken positiven Widerstandskoeffizienten aufweist. Bei steigender Temperatur steigt demnach auch der Schliessungswiderstand der galvanischen Doppelzelle 34, so dass weniger Gas entwickelt und auf den Kolben ein geringerer Gasdruck ausgeübt wird; und
- zweitens können Kunststoffmaterialen des Behälters 1 und des Kolbens 23 unterschiedliche thermische Ausdehnungskoeffizienten aufweisen, wobei der Ausdehnungskoeffizient des Materials des Kolbens grösser ist als derjenige des Behälters. Bei steigender Temperatur erhöht sich demnach der Reibungswiderstand des Kolbens, so dass die sinkende Viskosität des Schmierstoffs mindestens teilweise ausgeglichen wird.

Wenn im Betrieb des vorliegenden Geräts sich entweder der Schmierstoffvorrat oder die galvanischen Zellen erschöpfen und somit eine fortgesetzte Abgabe von Schmierstoff an das Schmiersystem nicht mehr gewährleistet ist, kann dieser nachteilige Zustand ohne grossen Aufwand und innert kürzester Zeit behoben werden. Es genügt, mittels einfacher Schraubbewegungen die Schmierstoffpackung und/oder die galvanische Doppelzelle zu ersetzen. Vorteilhafterweise ist die Kapazität der galvanischen Zelle 34 bezüglich des in der Hülle 31 in den Behälter 1 einbringbaren Schmierstoffs 32 so abgestimmt, dass zuerst der Schmierstoff erschöpft ist. In diesem Fall werden der Schmierjede weiteren Wartungsarbeiten oder Teileersatz ermöglicht ist.

Aus der Fig. 3 und den vorangehenden Erläuterungen sind auch die Vorteile des vorliegenden Geräts ersichtlich, dass ein an sich problematisches Diaphragma nicht benötigt ist, wobei die statt eines Diaphragma vorgesehenen Dichtungsringe praktisch keinem Verschleiss unterworfen sind, und dass es im Gegensatz zu dem eingangs erwähnten, bekannten Gerät nicht erforderlich ist, den elektrischen Schaltkreis, also insbesondere das einstellbare Widerstandselement, in einem separaten Einsatz räumlich getrennt von der galvanischen Zelle unterzubringen.

Während beim beschriebenen Ausführungsbeispiel der Schmierstoff 32 in einer biegsamen Hülle 31 verpackt ist, welche nach ihrer Auftrennung durch Abschneiden ihres eines Endes oder durch Perforation in einfacher und sauberer Weise in den Behälter 1 eingesetzt werden kann, ist es natürlich auch möglich, den Behälter mit hüllenlosem, offenem Schmierstoff direkt zu füllen. Ferner kann die aus dem Widerstandselement 48, dem Schleifer 47, den Kontaktelementen 44 und 45 sowie der metallischen Scheibe 46 bestehende Anordnung zur Veränderung des Schliessungswiderstandes der galvanischen Zellen 35 und 36 auch gekapselt und mit entsprechenden Kontaktelementen 44 und 45 für die galvanischen Zellen 35, 36 versehen sein.

## Patentansprüche

1. Gerät zur selbstätigen, steuerbaren Abgabe eines Schmierstoffs an ein Schmiersystem, mit einem durch einen beweglichen Kolben in eine Schmierstoffkammer und in eine Druckgaskammer gas- und schmierstoffdicht getrennten Behälter, welcher auf der Bodenseite des die Schmierstoffkammer enthaltenden Behälterteils mit einem auf dem Schmiersystem befestigbaren Schmierstoffauslass und in dem die Druckgaskammer enthaltenden Behälterteil mit mindestens einer galvanischen Zelle zur Entwicklung eines auf den Kolben wirkenden Gases versehen ist, wobei an Elektroden der galvanischen Zelle ein ebenfalls in dem die Druckgaskammer enthaltenden Behälterteil befindlicher elektrischer Schaltkreis mit einstellbarem Widerstandselement angeschlossen ist, dadurch gekennzeichnet, dass die mit dem Schmierstoffauslass versehene Bodenseite des Behälters als lösbarer Deckel ausgebildet ist, und dass die mindestens eine galvanische Zelle kapselförmig ausgebildet und in einem von der Gaskammer getrennten und mit dieser über eine Gasdurchlassöffnung verbundenen, von aussen zugänglichen, gasdicht verschliessbaren Behälterraum auswechselbar aufgenommen ist, wobei im genannten Behälterraum das einstellbare Widerstandselement angeordnet ist, welches über Kontaktelemente mit den Elektroden der auswechselbaren galvanischen Zelle in elektrischer Verbindung steht und über ein Drehelement von aussen kontinuierlich verstellbar ist.

2. Gerät nach Anspruch 1, dadurch gekennzeichnet, dass zur Aufnahme des Schmierstoffs eine verschlossene, biegsame Hülle vorgesehen ist, in welcher der Schmierstoff bei abgenommenem Deckel der Bodenseite des Behälters in die Schmierstoffkammer einbringbar und durch Auftrennen oder Perforieren des dem Schmierstoffauslass des Deckels benachbarten Hüllenendes mit dem Schmierstoffauslass des aufgebrachten Deckels in Verbindung bringbar ist.

3. Gerät nach Anspruch 1 oder 2, dadurch gekennzeichnet, dass jede kapselförmige galvanische Zelle in einem ihrer Bodenwände mindestens eine Gasauslassöffnung aufweist, welche beim Einlegen der galvanischen Zelle in den Behälterraum durch einen Kleber abgedeckt ist, um das Eindringen eines Fremdgases in die Zelle und das Austrocknen der Zelle zu verhindern.

4. Gerät nach einem der Ansprüche 1 bis 3, dadurch gekennzeichnet, dass im Behälterraum zwei übereinander mechanisch fest verbundene und elektrisch in Reihe geschaltete kapselförmige galvanische Zellen angeordnet sind.

5. Gerät nach einem der Ansprüche 1 bis 4, dadurch gekennzeichnet, dass der die mindestens eine galvanische Zelle aufnehmende Behälterraum topfförmig ausgebildet und mit einem lösbaren Deckel gegenüber der umgebenden Atmosphäre gasdicht verschlossen ist, wobei der Boden des topfförmigen Behälterraums mit der zur Druckgaskammer führenden Gasdurchlassöffnung versehen ist, dass ferner in den topfförmigen Behälterraum eine Hülse drehbar und axial arretiert eingesetzt ist, die mit einem radial ausserhalb des Deckels des Behälterraums befindlichen, Griffmittel aufweisenden Flansch versehen ist, und dass benachbart zum Boden des topfförmigen Behälterraums das Widerstandselement am Ende der Hülse angebracht ist, wobei das Widerstandselement einerseits über ein erstes Kontaktelement mit der einen Elektrode der kapselförmigen galvanischen Zelle und andererseits über einen ortsfesten Schleifer und ein zweites Kontaktelement mit der anderen Elektrode der kapselförmigen galvanischen Zelle in elektrischer Verbindung steht.

6. Gerät nach einem der Ansprüche 1 bis 5, dadurch gekennzeichnet, dass der Behälter auf seiner einen Seite mindestens in dem vom Kolben überstrichenen Bereich mindestens teilweise mit einer gasdichten Metallschicht überzogen ist, um eine Gasdiffusion durch die Behälterwand in diesem Bereich zu verhindern.

7. Gerät nach einem der Ansprüche 1 bis 6, dadurch gekennzeichnet, dass das einstellbare Widerstandselement einen positiven thermischen Widerstandskoeffizienten hat, um den durch die galvanische Zelle fliessenden Strom bei steigender Temperatur herabzusetzen.

8. Gerät nach einem der Ansprüche 1 bis 7, dadurch gekennzeichnet, dass der Behälter und der Kolben aus Kunststoffmaterialien mit unterschiedlichen thermischen Ausdehnungskoeffizienten bestehen, wobei das Material des Kolbens einen höheren Ausdehnungskoeffizienten als dasjenige des Behälters hat, um die Bewegung des Kolbens bei steigender Temperatur zu hemmen.

## Claims

1. Device for automatic, controllable dispensing of a lubricant in a lubricating system, with a container separated gas-tightly and lubricant-tightly by a movable piston into a lubricant chamber and into a compressed gas chamber, which container is provided on the bottom side of the container part containing the lubricant chamber with a lubricant outlet fastenable to the lubricating system and in the container part containing the compressed gas chamber is provided with at least one galvanic cell to develop a gas acting upon the piston, an electric circuit with an adjustable resistance element, the circuit likewise located in the container part containing the compressed gas chamber, being connected to electrodes of the galvanic cell characterized in that the bottom side of the container, the side provided with the lubricant outlet, is designed as a detachable cap, and in that the at least one galvanic cell is designed capsule-shaped and, in a way that it can be exchanged, is received in a gas-tight, closable container space, accessible from the outside, separate from the gas chamber and connected thereto via a gas-permeable opening, the adjustable resistance element being disposed in the said container space, which element is in electrical contact with the electrodes of the exchangeable galvanic cell via contact elements and is continuously adjustable from the outside via a rotatable element.

2. Device according to claim 1, characterized in that for accepting the lubricant a closed, bendable bag is foreseen in which the lubricant can be introduced into the lubricant chamber when the lid of the bottom side of the container is removed and can be brought into connection with the lubricant outlet of the mounted lid through separation or perforation of the end of the bag adjacent to the lubricant outlet.

3. Device according to claim 1 or 2, characterized in that in one of its bottom walls each capsule-shaped galvanic cell has at least one gas outlet opening which is covered by a sticker upon insertion of the galvanic cell in the container space in order to prevent the penetration of a foreign gas into the cell and the drying out of the cell.

4. Device according to one of the claims 1 to 3, characterized in that disposed in the container space are two capsule-shaped galvanic cells, one above the other, firmly connected mechanically and electrically joined in series.

5. Device according to one of the claims 1 to 4, characterized in that the container space accepting the at least one galvanic cell is designed pot-shaped and is gas-tightly sealed with respect to the surrounding atmosphere with a detachable cap, the bottom of the pot-shaped container space being provided with the gas-permeable opening leading to the compresssed gas chamber, in that furthermore in the pot-shaped container space a sleeve is inserted rotatably and axially secured, which sleeve is provided with a flange having gripping means located radially outside the cap of the container space, and in that adjacent to the bottom of the pot-shaped container space the resistance element is mounted on the end of the sleeve, the resistance element being electrically connected, on the one side, via a first contact element with the one electrode of the capsule-shaped galvanic cell and on the other side via a stationary sliding contact and a second contact element with the other electrode of the capsule-shaped galvanic cell.

6. Device according to one of the claims 1 to 5, characterized in that the container is coated at least partly with a gas-tight metal coating on its one side at least in the area through which the piston moves in order to prevent gas diffusion through the container wall in this area.

7. Device according to one of the claims 1 to 6, characterized in that the adjustable resistance element has a positive temperature coefficient in order to attenuate the current flowing through the galvanic cell with increasing temperature.

8. Device according to one of the claims 1 to 7, characterized in that the container and the piston consist of plastic materials with differing thermal expansion coefficients, the material of the piston having a higher thermal expansion coefficient than that of the container, in order to impede the movement of the piston with increasing temperature.

## Revendications

1. Appareil de distribution automatique et réglable de produit lubrifiant à un système de lubrification, avec un récipient, étanche au gaz et au produit lubrifiant, partagé par un piston mobile en une chambre pour le produit lubrifiant et une chambre pour un gaz sous pression, le récipient étant muni sur le fond de la partie du récipient contenant la chambre pour le produit lubrifiant d'une évacuation pour le produit lubrifiant, peuvent être fixée au système de lubrification, et dans la partie du récipient contenant la chambre pour le gaz sous pression d'au moins une cellule galvanique pour libérer un gaz agissant sur le piston, un circuit électrique avec un électrique avec un élément à résistance variable également contenu dans la partie du récipient contenant la chambre pour le gaz sous pression étant connecté aux électrodes de la cellule galvanique, caractérisé en ce que le fond du récipient muni de l'évacuation pour le produit lubrifiant est constitué d'un couvercle détachable, et en ce que la ou les cellules galvaniques ont une forme de capsule et sont contenues dans un espace de réservoir accessible de l'extérieur et peuvent être fermé de manière étanche au gaz, séparé de la chambre par le gaz mais relié à celle-ci par une ouverture de passage de gaz, I'élément de résistance variable étant placé dans ledit espace de réservoir, et étant relié électriquement à travers des élément de contact avec les électrodes de la cellule galvanique échangeables, I'élément de résistance variable pouvant être varié continuellement de l'extérieur au moyen d'un élément rotatif.

2. Appareil selon la revendication 1, caractérisé en ce qu'une enveloppe fermée et flexible est prévue pour contenir le produit lubrifiant, dans laquelle le produit lubrifiant peut être introduit dans la chambre pour le produit lubrifiant en retirant le couvercle du fond du récipient et être mis en contact avec l'évacuation de produit lubrifiant du couvercle remis en place en séparant ou perforant l'extrémité de l'enveloppe proche de l'évacuation de produit lubrifiant du couvercle.

3. Appareil selon la revendication 1 ou 2, caractérisé en ce que chaque cellule galvanique en forme de capsule présente dans l'une de ses parois au moins une ouverture d'échappement de gaz, qui est recouverte lors de l'introduction de la cellule galvanique dans l'espace de réservoir d'un autocollant pour éviter l'introduction de gaz étranger dans la cellule et le séchage de la cellule.

4. Appareil selon l'une des revendications 1 à 3, caractérisé en ce que deux cellules galvaniques liées solidairement l'une au-dessus de l'autre par des moyens mécaniques et branchées électriquement en série sont placées dans l'espace de réservoir.

5. Appareil selon l'une des revendications 1 à 4, caractérisé en ce que l'espace de réservoir contenant au moins une cellule galvanique a une forme de pot et est fermé au moyen d'un couvercle détachable de façon étanche à l'atmosphère environnante, le fond de l'espace de réservoir en forme de pot étant muni de l'ouverture de passage de gaz conduisant à la chambre pour le gaz sous pression, et en ce qu'une douille, pouvant être tournée, mais bloquée axialement est en outre placée dans l'espace de réservoir en forme de pot, la douille étant munie d'une collerette présentant des moyens de saisie et s'étendant radialement en dehors du couvercle de l'espace de réservoir, et en ce que l'élément de résistance est mis en place à l'extrémité de la douille et proche du fond de l'espace de réservoir en forme de pot, I'élément de résistance étant en contact électrique d'une part avec l'une des électrodes de la cellule galvanique en forme de capsule au travers d'un premier élément de contact, et d'autre part avec l'autre électrode de la cellule galvanique en forme de capsule au travers d'un curseur stationnaire et d'un deuxième élément de contact.

6. Appareil selon l'une des revendications 1 à 5, caractérisé en ce que le récipient est au moins partiellement recouvert sur sa face balayée par le piston par une couche métallique étanche au gaz, afin d'éviter une diffusion de gaz à travers les parois du récipient dans cette partie.

7. Appareil selon l'une des revendications 1 à 6, caractérisé en ce que l'élément de résistance variable a un coefficient de résistance thermique positif, afin de diminuer le courant sortant de la cellule galvanique lorsque la température augmente.

8. Appareil selon l'une des revendications 1 à 7, caractérisé en ce que le récipient et le piston sont réalisés en matériaux synthétiques avec des coefficients de dilatation thermique différents, le matériau du piston ayant un coefficient de dilatation supérieur à celui du récipient, afin de réduire le déplacement du piston lorsque la température augmente.
